# EUROPÄISCHE PATENTSCHRIFT

(11) **EP 2 113 405 B1**
(45) Veröffentlichungstag und Bekanntmachung des Hinweises auf die Patenterteilung: **08.08.2012**
(21) Anmeldenummer: 09005293.7
(22) Anmeldetag: 14.04.2009
(51) Int. Cl.: B60G 3/20, B60G 7/00

(54) **Einzelradaufhängung für Kraftfahrzeuge**
Independent wheel suspension for motor vehicles
Suspension de roue indépendante pour véhicules automobiles

(30) Priorität: 30.04.2008 DE 102008021786
(43) Veröffentlichungstag der Anmeldung: 04.11.2009
(73) Patentinhaber: Voith Patent GmbH, 89522 Heidenheim (DE)
(72) Erfinder: Facondo, Alessio, 25050 Provaglio d ' Iseo (Brescia) (IT); Tinti, Antonio, 25081 Pontenove die Bedizzole (IT)
(74) Vertreter: Dr. Weitzel & Partner

(56) Entgegenhaltungen:
- EP-A1- 0 548 989
- DE-A1- 19 850 136
- US-A- 5 498 020

## Beschreibung

Die Erfindung betrifft eine Einzelradaufhängung für ein Kraftfahrzeugrad. Solche Aufhängungen umfassen die folgenden Bauteile: einen Achsschenkel, einen Achsschenkelträger, einen oberen und einen unteren Lenker; jeder der beiden Lenker ist über ein Drehlager einerseits mit dem Achsschenkelträger und andererseits über ein weiteres Drehlager mit dem Fahrzeugrahmen verbunden.

Einzelradaufhängungen für Kraftfahrzeuge sind in einer Vielzahl von Ausführungen bekannt. DE A 33 45 952 A beschreibt eine Einzelradaufhängung mit Radnabe, Achsschenkelträger und Doppelquerlenkern. Dabei sind die Querlenker mittels eines Drehlagergelenkes am Achsschenkelträger befestigt. Die Drehlagerwelle ragt dabei beidseits über den Achsschenkelträger hinaus. Der Radeinschlag beim Einlenken ist bei dieser Ausführungsform begrenzt.

Einzelradaufhängungen mit einer Radnabe, einem die Radnabe tragenden Achsschenkel sowie einem oberen und unteren Querlenker, welche über ein Drehlager an dem Achsschenkel angelenkt sind, sind aus den folgenden Druckschriften bekannt:
DE 198 50 136 A1
EP 0 548 989 A1
US 5 498 020.

Einzelradaufhängungen nach Doppelquerlenkerprinzip sind in Bezug auf Komfort und Sicherheit optimiert.

Die Achsschenkellagerung erfolgt mittels Achsschenkelbolzen mit einem Achsschenkelträger. Gegenüber einer Gleitlagerung oder einer Kugelgelenklagerung erzielt man eine optimale Leichtgängigkeit, und damit eine hohe Lenkpräzision sowie einen guten Geradlauf. Man kann auf Dichtelemente verzichten, um die Lebensdauer und Betriebssicherheit zu steigern.

Die bekannten Einzelradaufhängungen sind dennoch verbesserungsfähig. Dabei soll eine Vielzahl von Teilaufgaben gelöst werden. Hierzu gehören
- hoher Fahrkomfort
- geringe Seitenneigung bei Kurvenfahrten
- kleiner Wendekreis
- kompakte Bauweise
- Gewichtsreduzierung
- Fahrsicherheit
- hohe Lebensdauer
- Isolierung von Schwingungen der Karosserie
- geringer Verschleiss
- geringes Gewicht
- kostengünstige Konstruktion
- hohe Manövrierfähigkeit

Diese Aufgabe wird mit einer Einzelradaufhängung gemäß Anspruch 1 gelöst.

Dabei wird auf den klassischen Achsschenkel mit zugehörendem Achsschenkelträger völlig verzichtet.

Bei bekannten Bauarten von Einzelradaufhängungen führen der Achsschenkelträger und der Achsschenkel eine Drehbewegung relativ zueinander aus. Dies ist bei der erfindungsgemäßen Lösung nicht der Fall. Die sonst vorhandene zusätzliche Drehachse liegt bei der Einzelradaufhängung gemäß der Erfindung innerhalb des Radnabenträgers, und nicht wie bei bekannten Aufhängungen außerhalb.

Durch den Wegfall der genannten Drehlagerung zwischen Achsschenkelträger und Achsschenkel wird das Bauvolumen verringert, gleichzeitig hiermit das Gewicht, und damit auch die Herstellungskosten.

Die Erfindung ist anhand der Zeichnungen näher erläutert. Darin ist im einzelnen folgendes dargestellt:
Figur 1 zeigt in perspektivischer Darstellung und in Seitenansicht eine Einzelradaufhängung.
Figur 2 zeigt einen Ausschnitt aus dem Gegenstand von Figur 1.
Figur 3 zeigt eine Schnittansicht entlang der Schnittlinie A-A in Figur 1.

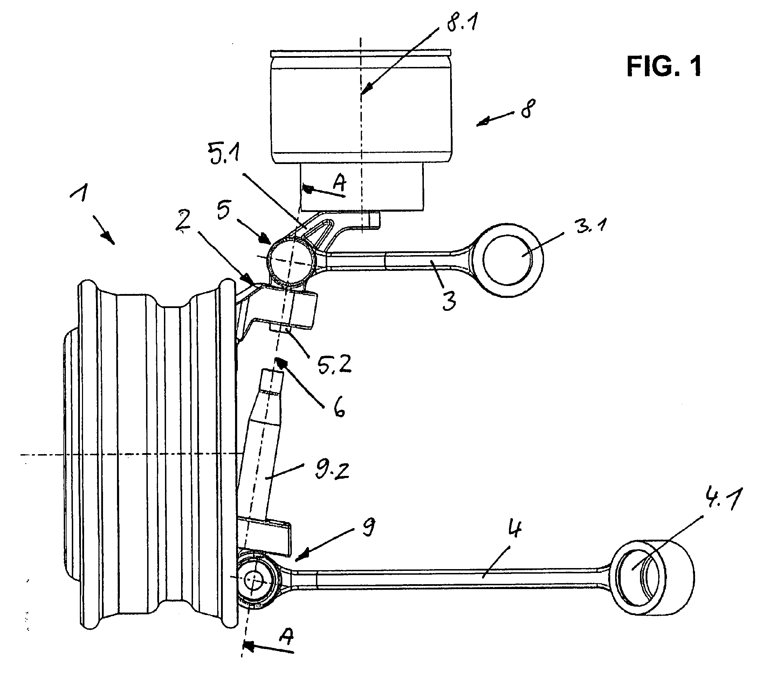

Die in Figur 1 gezeigte Einzelradaufhängung ist für ein Nutzfahrzeug bestimmt. Sie lässt sich jedoch auch für andere Kraftfahrzeuge einsetzen.

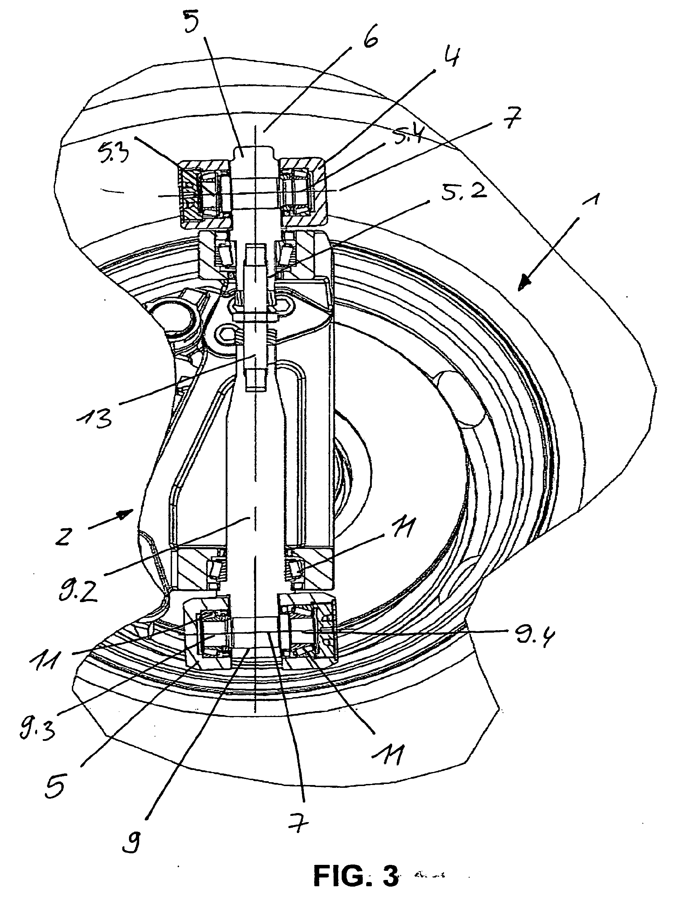

Man erkennt im Einzelnen folgendes:
Eine Radnabe 1 zum Tragen eines nicht dargestellten Reifens ist von einem Radnabenträger 2 getragen. Der Radnabenträger 2 ist seinerseits getragen von einem oberen Querlenker 3 und einem unteren Querlenker 4. Der obere Querlenker 3 trägt an seinem in der Figur rechtsseitigen Ende eine Lagerbuchse 3.1, die Bestandteil eines Drehlagers ist. Das Drehlager ist ortsfest. Der obere Querlenker 3 ist an seinem linken Ende an ein Kreuzgelenk 5 angeschlossen (oberes Kreuzgelenk). Das obere Kreuzgelenk erlaubt ein Verdrehen des Radnabenträgers 2 und vorliegend der gesamten Radnabe 1 um eine erste Achse 6, sowie des oberen Querlenkers 3 um eine zweite Achse 7. Die Achsen 6, 7 verlaufen senkrecht zueinander. Siehe die Figuren 1 und 3 mit den Achsen 6 und 7.

Bestandteil des oberen Kreuzgelenkes 5 ist eine Konsole 5.1 sowie ein nach unten ragender Zapfen, der in einen Steuerzapfen 5.2 ausläuft. Diese beiden sind starr miteinander verbunden und bilden einen Doppelhebel. Die Konsole 5.1 ist mit einer Luftfeder 8 fest verbunden.

Der untere Querlenker 4 weist an seinem in der Figur rechten Ende wiederum ein Drehlager 4.1 auf.

An seinem in der Figur linken Ende befindet sich wiederum ein Kreuzgelenk, nämlich das untere Kreuzgelenk 9. Das untere Kreuzgelenk 9 greift ebenfalls am Radnabenträger 2 an. Das untere Kreuzgelenk 9 ist gleich oder ähnlich aufgebaut wie das obere Kreuzgelenk 5. Jedoch weist das untere Kreuzgelenk 9 kein Bauteil entsprechend der Konsole 5.1 des oberen Kreuzgelenkes auf. Jedoch hat es einen Steuerzapfen 9.2, analog dem Steuerzapfen 5.2 des oberen Kreuzgelenkes 5.

Während des Betriebes führt die Luftfeder 8 eine vertikale Bewegung aus. Dabei verläuft die Längsachse 8.1 der Luftfeder stets vertikal oder wenigstens annähernd vertikal.

Die genannte Konsole 5.1 ist im dargestellten Ausführungsbeispiel parallelogrammförmig gestaltet.

Die Radnabe 1 und der Radnabenträger 2 sind fest miteinander verbunden. Sie können auch ein einziges Bauteil bilden.

Die genannte Achse 6 fällt vorliegend mit den Längsachsen der beiden Steuerzapfen 5.2 und 9.2 zusammen. Achse 6 ist die Drehachse, um welche das Rad beim Lenken verdreht wird.

Bei der Aufhängung gemäß der Erfindung befindet sich die Drehachse einer Lenkbewegung innerhalb des Radnabenträgers, und nicht außerhalb, wie bei bekannten Aufhängungen.

Durch den Wegfall der genannten Drehlagerung zwischen Achsschenkelträger und Achsschenkel wird das Bauvolumen verringert, gleichzeitig hiermit das Gewicht und damit auch die Herstellungskosten.

Die beiden Kreuzgelenke 5, 9 ermöglichen somit gleichermaßen eine Schwenkbewegung des Rades bzw. der Radnabe 1 um die Achse 6, womit das Rad gelenkt werden kann und gleichzeitig eine vertikale Bewegung zum Abfedern von Stößen, die über das Rad auf die Luftfeder 8 und einen nicht gezeigten Stoßdämpfer übertragen werden. Der Stoßdämpfer kann an seinem einen Ende am unteren Querlenker 4 und an seinem anderen Ende direkt am Fahrzeugrahmen angebracht sein. Auch andere Anlenkungen des Stoßdämpfers sind möglich, beispielsweise am Radnabenträger 2 bzw. an der Radnabe 1 sowie an der Fahrzeugkarosserie.

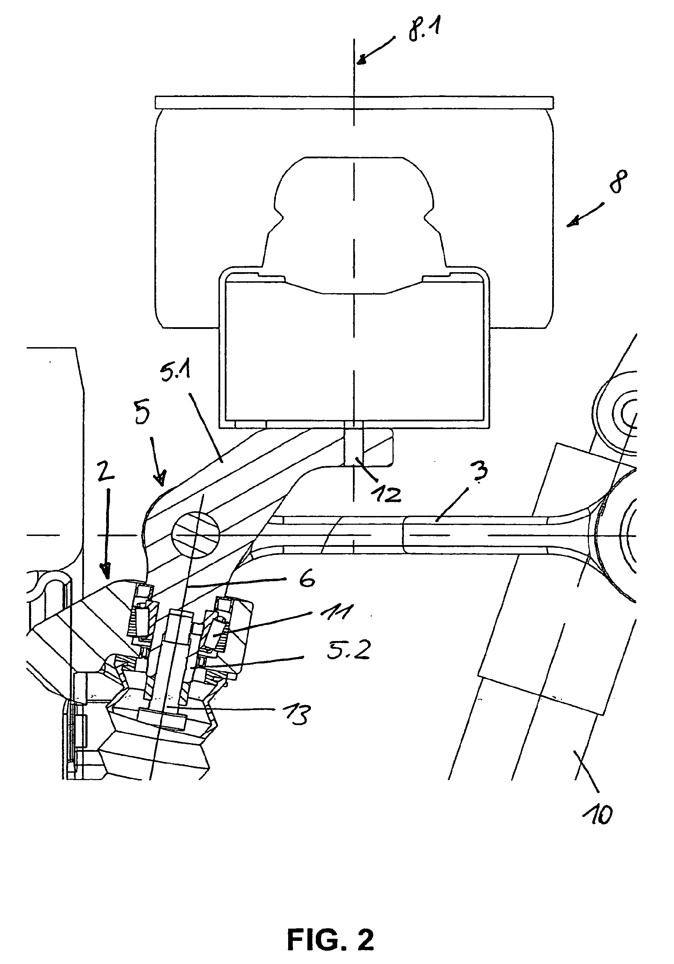

Die Figur 2 zeigt eine vergrößerte Darstellung des oberen Querlenkers 3. Dabei sind dieselben Elemente mit denselben Bezugszeichen wie in Figur 1 versehen. Weiterhin ist ersichtlich, dass die Konsole 5.1, vorliegend einteilig mit dem oberen Kreuzgelenk 5 ausgeführt ist und eine sichelförmige Form aufweist. An ihrem einen Ende ist diese mit der Luftfeder 8 über einen Bolzen 12 verbunden. Auch weitere Verbindungsmöglichkeiten sind denkbar, wie zum Beispiel Schweißen oder Nieten.

Weiterhin ist ein Stoßdämpfer 10 ersichtlich, der vorliegend am unteren Querlenker 4 angelenkt ist (nicht gezeigt) und dort im Bereich des unteren Kreuzgelenkes 9 am unteren Querlenker 4 drehbar befestigt ist.

Entlang der Achse 6 des oberen Kreuzgelenkes 5 weist der Steuerzapfen 5.2 eine Bohrung auf, in die ein Verbindungsbolzen 13 eingreift.

Der Radnabenträger 2 weist an seinem oberen, dem oberen Kreuzgelenk 5 zugewandten Ende ein Drehlager auf, welches vorliegend als Wälzlager 11 und insbesondere als Kegelrollenlager mit schrägen Achsen, welche winklig zur Achse 6 verlaufen, ausgeführt ist. Auch andere Lager, wie beispielsweise kombinierte Axial-/Radiallager sind denkbar. Das Wälzlager 11 ermöglicht eine deutliche Leichtgängigkeit und eine verminderte Reibung, was einen Vorteil gegenüber den bisher verwendeten Kugellagern bringt.

Die Figur 3 zeigt eine Schnittansicht von Figur 1 gemäß den Pfeilen A-A. Wie hieraus ersichtlich wird, ist das eine Ende des oberen Kreuzgelenks 5, vorliegend der Steuerzapfen 5.2 sowie das eine Ende des unteren Kreuzgelenks 9, vorliegend der Steuerzapfen 9.2 über einen Verbindungsbolzen 13 gemeinsam verbunden. Diese Verbindung kann beispielsweise als Schraubverbindung ausgeführt sein.

Die beiden Kreuzgelenke 5, 9 weisen jeweils zwei Lagerzapfen 5.3, 5.4 sowie 9.3 und 9.4 auf, an denen jeweils das eine Ende des oberen Querlenkers 3 bzw. des unteren Querlenkers 4 mittels Lagern, vorliegend Wälzlagern 11 angelenkt ist.

### Bezugszeichenliste

- 1: Radnabe
- 2: Radnabenträger
- 3: Oberer Querlenker
- 3.1: Drehlager
- 4: Unterer Querlenker
- 4.1: Drehlager
- 5: Oberes Kreuzgelenk
- 5.1: Konsole
- 5.2: Steuerzapfen
- 5.3: Lagerzapfen
- 5.4: Lagerzapfen
- 6: Achse
- 7: Achse
- 8: Luftfeder
- 8.1: Längsachse
- 9: Unteres Kreuzgelenk
- 9.2: Steuerzapfen
- 9.3: Lagerzapfen
- 9.4: Lagerzapfen
- 10: Stoßdämpfer
- 11: Wälzlager
- 12: Bolzen
- 13: Verbindungsbolzen

## Patentansprüche

1. Einzelradaufhängung für ein Fahrzeug
1.1 mit einer Radnabe (1);
1.2 mit einem Radnabenträger (2);
1.3 mit einem oberen und einem unteren Querlenker (3, 4);
1.4 die beiden Querlenker (3, 4) sind über ein Drehlager einerseits an den Radnabenträger (2) und andererseits an das Chassis des Fahrzeuges angeschlossen;
1.5 mit einem oberen Kreuzgelenk (5), das ein Verdrehen des Radnabenträgers (2) um eine erste Achse (6) sowie ein Verdrehen des oberen Querlenkers (3) um eine zweite Achse (7) erlaubt; **dadurch gekennzeichnet, dass**
1.6 beide Achsen (6, 7) senkrecht zueinander verlaufen und sich schneiden;
1.7 das obere Kreuzgelenk (5) trägt den oberen Querlenker (3) sowie eine Luftfeder.

2. Einzelradaufhängung nach Anspruch 1, **dadurch gekennzeichnet, dass** ein unteres Kreuzgelenk (9) zum Tragen des unteren Querlenkers (4) vorgesehen ist, das ein Verdrehen des Radnabenträgers (2) um die erste Achse (6) sowie ein Verdrehen des unteren Querlenkers (4) um eine dritte Achse (7) erlaubt.

3. Einzelradaufhängung gemäß einem der Ansprüche 1 oder 2, **dadurch gekennzeichnet, dass** das Kreuzgelenk (5, 9) jeweils einen Steuerzapfen (5.2, 9.2) umfasst, weicher mittels eines Wälzlagers (11) im Radnabenträger (2) drehbar gelagert ist.

4. Einzelradaufhängung gemäß einem der Ansprüche 1 bis 3, **dadurch gekennzeichnet, dass** das Kreuzgelenk (5, 9) jeweils zwei Lagerzapfen (5.3, 5.4, 9.3, 9.4) umfasst, an denen sich mittels eines Wälzlagers (11) die beiden Querlenker (3, 4) abstützen.

5. Einzelradaufhängung gemäß einem der Ansprüche 1 bis 4, **dadurch gekennzeichnet, dass** das obere Kreuzgelenk (5) einen Doppelhebel umfasst, dessen oberer Teil als Konsole (5.1) für die Luftfeder dient, und dessen unterer Teil im Radnabenträger (2) gelagert ist.

6. Einzelradaufhängung gemäß einem der Ansprüche 3 bis 5, **dadurch gekennzeichnet, dass** die einander zugewandten Enden der Steuerzapfen (5.2, 9.2) über einen Verbindungsbolzen (13) miteinander verbunden sind.

7. Einzelradaufhängung gemäß Anspruch 6, **dadurch gekennzeichnet, dass** die Verbindung eine Schraubverbindung ist.

## Claims

1. An independent suspension for a vehicle,
1.1 with a wheel hub (1);
1.2 with a wheel hub support (2);
1.3 with an upper and bottom suspension arm (3, 4);
1.4 the two suspension arms (3, 4) are connected via a pivot bearing with the wheel hub support (2) on the one hand and with the chassis of the vehicle on the other hand;
1.5 with an upper universal joint (5) which allows twisting of the wheel hub support (2) about a first axis (6) and a twisting of the upper suspension arm (3) about a second axis (7), **characterized in that**
1.6 both axes (6, 7) extend perpendicularly with respect to each other and intersect one another;
1.7 the upper universal joint (5) carries the upper suspension arm (3) and an air spring.

2. An independent suspension according to claim 1, **characterized in that** a bottom universal joint (9) is provided for supporting the bottom suspension arm (4), which bottom universal joint allows a twisting of the wheel hub support (2) about the first axis (6) and a twisting of the bottom suspension arm (4) about a third axis (7).

3. An individual suspension according to one of the claims 1 or 2, **characterized in that** the universal joint (5, 9) respectively comprises a control journal (5.2, 9.2) which is rotatably mounted by means of a rolling bearing (11) in the wheel hub support (2).

4. An individual suspension according to one of the claims 1 to 3, **characterized in that** the universal joint (5, 9) respectively comprises two bearing journals (5.3, 5.4, 9.3, 9.4) on which the two suspension arms (3, 4) are supported by means of a rolling bearing (11).

5. An individual suspension according to one of the claims 1 to 4, **characterized in that** the upper universal joint (5) comprises a double lever whose upper part is used as a bracket (5.1) for the air spring and whose bottom part is held in the wheel hub support (2).

6. An individual suspension according to one of the claims 3 to 5, **characterized in that** the mutually facing ends of the control journals (5.2, 9.2) are connected with each other via a connecting pin (13).

7. An individual suspension according to claim 6, **characterized in that** the connection is a screwed joint.

## Revendications

1. Suspension à roues indépendantes pour un véhicule
1.1 avec un moyeu de roue (1);
1.2 avec un support de moyeu de roue (2) ;
1.3 avec un levier triangulaire supérieur et un autre inférieur (3, 4) ;
1.4 les deux leviers triangulaires (3, 4) sont raccordés par un coussinet de pivotement, d'une part, au support de moyeu de roue (2) et, d'autre part, au châssis du véhicule ;
1.5 avec un joint à croisillon supérieur (5) qui permet un pivotement du support de moyeu de roue (2) autour d'un premier axe (6) et un pivotement du levier triangulaire supérieur (3) autour d'un deuxième axe (7) ;
**caractérisée en ce que**
1.6 les deux axes (6, 7) sont perpendiculaires l'un à l'autre et se croisent ;
1.7 le joint à croisillon supérieur (5) porte le levier triangulaire supérieur (3) ainsi qu'un ressort pneumatique.

2. Suspension à roues indépendantes selon la revendication 1, **caractérisée en ce qu'**il est prévu pour porter le levier triangulaire inférieur (4) un joint à croisillon inférieur (9) qui permet un pivotement du support de moyeu de roue (2) autour du premier axe (6) ainsi qu'un pivotement du levier triangulaire inférieur (4) autour d'un troisième axe (7).

3. Suspension à roues indépendantes selon l'une des revendications 1 ou 2, **caractérisée en ce que** chaque joint à croisillon (5, 9) comprend un goujon de commande (5.2, 9.2) qui est supporté avec possibilité de rotation au moyen d'un roulement (11) dans le support de moyeu de roue (2).

4. Suspension à roues indépendantes selon l'une des revendications 1 à 3, **caractérisée en ce que** chaque joint à croisillon (5, 9) comprend deux tourillons (5.3, 5.4, 9.3, 9.4) sur lesquels les deux leviers triangulaires (3, 4) s'appuient au moyen d'un roulement (11).

5. Suspension à roues indépendantes selon l'une des revendications 1 à 4, **caractérisée en ce que** le joint à croisillon supérieur (5) comprend un double levier dont la partie supérieure sert de console (5.1) pour le ressort pneumatique et dont la partie inférieure est supportée dans le support de moyeu de roue (2).

6. Suspension à roues indépendantes selon l'une des revendications 3 à 5, **caractérisée en ce que** les extrémités tournées l'une vers l'autre des goujons de commande (5.2, 9.2) sont reliées entre elles par un boulon d'assemblage (13).

7. Suspension à roues indépendantes selon la revendication 6, **caractérisée en ce que** l'assemblage est un assemblage vissé.
